# EUROPEAN PATENT SPECIFICATION

(11) **EP 3 474 437 B1**
(45) Date of publication and mention of the grant of the patent: **02.12.2020**
(21) Application number: 18201601.4
(22) Date of filing: 19.10.2018
(51) Int. Cl.: H02P 27/06, H02M 5/458, F25B 49/02

(54) **UNIVERSAL INPUT REFRIGERATING MACHINE**
UNIVERSALE EINGANGSSPANNUNG-KÜHLMASCHINE
MACHINE DE RÉFRIGÉRATION À ENTRÉE UNIVERSELLE

(30) Priority: 20.10.2017 IT 201700119018
(43) Date of publication of application: 24.04.2019
(73) Proprietor: Carel Industries S.p.A., 35020 Brugine (PD) (IT)
(72) Inventor: MORANDIN, Mattia, 35020 Brugine (Padova) (IT)
(74) Representative: De Giorgi, Michele

(56) References cited:
- EP-A1- 3 026 812
- DE-A1-102015 108 910
- JP-A- 2006 074 966
- US-A1- 2005 204 760

## Description

The present invention relates to a refrigerating machine suitable for cooling a power cabinet or an electronic or electromechanical device and, therefore, configured to generate a low cooling power.

In the present text, "low cooling power" is understood as meaning a cooling power in general of not more than 2 kW and, in particular, not more than 1.5 kW and preferably not less than 100 W. Nowadays low power refrigerating machines for cooling a power cabinet or an electronic or electromechanical device according to the preamble of the attached claim 1 are known.

These conventional refrigerating machines in particular have an ON/OFF functioning mode, namely the compressor is operated at a fixed speed with activation and deactivation cycles depending on the progression of the temperature of the user device to be cooled.

One drawback of these refrigerating machines is that they have a low operating efficiency.

These conventional machines have an apparatus for operating the electric motor which is designed for the specific electric power supply available.

Therefore the electric power supply apparatus will be different in refrigerating machines intended to be installed in geographical areas where the mains power supply is different.

For example, conventional refrigerating machines which are suitable for being connected to a 115 V AC and other mains power supply, equipped with a different apparatus for operating the compressor and designed to be installed in geographical areas in which the mains power supply available is 230 V AC, are thus nowadays available.

In general it must be taken into consideration that the nominal mains voltages available nowadays may vary between 110V, 120V, 200V, 208V, 230V and 240V with a frequency of 50-60 Hz for single-phase and 230V, 380V, 400V and 420 V with a frequency of 50-60 Hz for three-phase. The document US2005/204760 A1 discloses a refrigerating machine which comprises a DC/AC converter and can be powered from different power supply voltages.

The task of the present invention is that of providing a low power refrigerating machine for cooling a power cabinet or an electronic or electromechanical device which is universally designed for the mains power supply available and which, at the same time, has superior performance characteristics compared to the conventional machines described above.

The main task of the present invention consists in providing a refrigerating machine for cooling a power cabinet or an electronic or electromechanical device which provides a solution to the aforementioned problem, overcoming the aforementioned drawbacks of the refrigerating machines described above.

In connection with this task it is also an object of the present invention to propose a low power refrigerating machine for cooling a power cabinet or an electronic or electromechanical device which has a simplified structure and may be easily made with components which are conventional per se.

Another object of the present invention is to provide a low power refrigerating machine for cooling a power cabinet or an electronic or electromechanical device which is such that it may be used for a wide range of low cooling powers.

This task as well as these and other objects which will appear more clearly below are achieved by a refrigerating machine for cooling a power cabinet or an electronic or electromechanical device according to the attached claim 1.

Detailed characteristic features of a refrigerating machine for cooling a power cabinet or an electronic or electromechanical device according to the invention are described in the dependent claims.

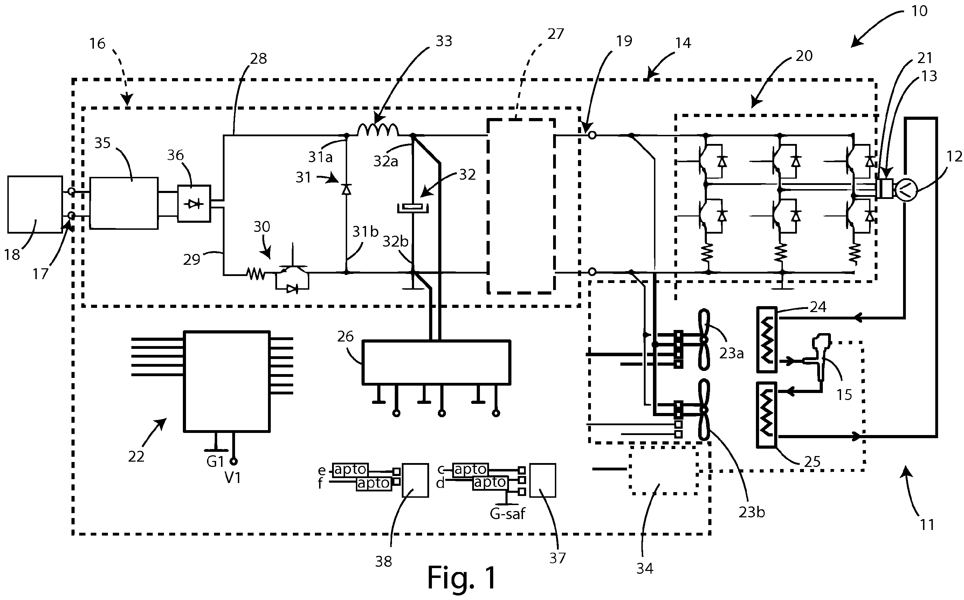

Further characteristic features and advantages of the invention will emerge more clearly from the description of a preferred, but not exclusive embodiment of a refrigerating machine for cooling a power cabinet or an electronic or electromechanical device according to the invention, illustrated by way of a nonlimiting example in the attached set of drawings, in which Figure 1 shows a simplified diagram of a refrigerating machine for cooling a power cabinet or an electronic or electromechanical device according to the invention.

With particular reference to the said figure, 10 denotes overall a low power refrigerating machine for cooling a power cabinet or an electronic or electromechanical device which per se conventionally comprises:
- a cooling circuit 11 comprising a compressor 12;
- an electric motor 13 connected to the compressor 12 in order to operate it;
- an operating apparatus 14 connected to the electric motor 13 in order to power it.

The cooling circuit 11 preferably comprises a variable-flowrate valve 15 which can be operated so as to modulate the flowrate of the cooling fluid circulating in the cooling circuit 11 or may comprise a fixed-flowrate throttling member, such as a capillary device.

The refrigerating machine 10, according to the present invention, has a particular feature in that the operating apparatus 14 comprises:
- an AC/DC converter device 16 configured so that it may be connected, by means of a first input connector 17, to a single-phase or three-phase or DC electrical network 18 and so as to provide a first output connector 19 with an output voltage Vu;
- a DC/AC converter device 20 connected to the first output connector 19 so as to powered by the latter at the output voltage Vu and having a second output connector 21 connected directly to the electric motor 13 in order to power it.

With reference to the attached figure, in this figure the electrical network 18 is shown as being of the single-phase type, but the same technical description presented here will be valid, with the necessary changes made, also for a three-phase or DC electrical network 18.

The AC/DC converter device 16 may be preferably configured so that the value of the output voltage Vu will have a predefined value independent of a mains voltage V-mains of the electrical network 18.

The DC/AC converter device 20, according to the present invention, is configured to power the electric motor 13 with a power supply voltage Va and at a power supply frequency which are variable upon command and independent of the power supply provided by the electrical network 18.

The electric motor 13 is preferably of the synchronous type; however, generally speaking, it may alternatively be of the asynchronous type.

Preferably, the DC/AC converter device 20 is configured to provide a three-phase electric power supply to the electric motor 13.

Advantageously, the AC/DC converter device 16 is configured so that the output voltage Vu is greater than or equal to, at every instant, to the maximum phase-to-phase peak voltage required by the electric motor 13, which is preferably equal to 48V.

In the technical jargon, the capacity of the DC bus must be preferably designed with dimensions so as to obtain on the DC bus a voltage which greater than or equal to, at each instant, the maximum phase-to-phase peak voltage required by the electric motor 13.

Basically, the refrigerating machine 10 according to the present invention is universal, namely can be connected to single-phase power supply networks of any electrical voltage, for example 115V, 120V, 200V, 208V, 230V or 240V with a frequency 50-60Hz, or to three-phase power supply networks, or to DC power supply networks preferably with a voltage of between 36V and 72V and preferably equal to 48V nominal.

In this way the refrigerating machine 10, according to the present invention, will not need to be designed for a specific power supply voltage available in the geographical area, such that the production and management of the refrigerating machines may be greatly simplified by providing models which do not vary according to the geographical zone in which they are to be installed. Advantageously, the electric motor 13 is configured to be powered with a voltage less than 60V and in particular preferably equal to 48V.

In this way, the operating apparatus 14 is preferably configured to provide a power supply voltage Va equal to about 48V.

This solution is particularly advantageous since preferably the operating apparatus will be configured to lower the voltage from the mains voltage V-mains to the power supply voltage Va by modulating the value and the frequency thereof in order to drive the electric motor 13 at a variable speed and thus correspondingly modulate the cooling power of the cooling circuit 11 depending on the cooling power required in the operating conditions which may arise.

In this way, while limiting greatly the complexity of the operating apparatus 14 and the corresponding cost, said apparatus may be universally designed for the power supply conditions (network voltage and type of power supply: single-phase, three-phase or direct current) while allowing the performance features of the refrigerating machine 10 to be drastically increased by means of modulation of the operating speed of the electric motor 13 which in a per se conventional manner may be adapted to the cooling power required.

Advantageously, the refrigerating machine 10 therefore comprises a control device 22 connected to the AC/DC converter device 16, to the DC/AC converter device 20 and preferably also to the variable-flowrate valve 15, if provided, in order to regulate the operation of the cooling circuit 11 in a per se conventional manner which is not further described.

The refrigerating machine 10 according to the present invention advantageously comprises at least one fan 23a, 23b connected to the control device 22 so as to be operated at a variable speed.

The cooling circuit 11 comprises at least one heat exchanger, and especially at least one capacitor unit 24 and at least one evaporator unit 25, to at least one of which a fan 23a and/or 23b is connected.

In the present description reference is made to the embodiment shown by way of example in the attached figure which has two fans respectively indicated by the reference numbers 23a, 23b, although the same description shall be applicable, with the necessary changes made, to refrigerating machines provided with a single fan or more than two fans.

Advantageously, the refrigerating machine 10 comprises a flyback power supply 26 connected both to the first output connector 19, in order to be powered, and to the fans 23a, 23b, in order to regulate the speed of rotation thereof, and also to the control device 22, in order to be operated by the latter so as to regulate the speed of rotation of the fans 23a, 23b, depending on the operating conditions of the cooling circuit 11 and in particular depending on the cooling power which may be required of the cooling circuit 11 during operation thereof. "Flyback power supply"

in the present text is understood as meaning an electronic device which in general performs the same functions as a flyback power supply. Each fan 23a, 23b is preferably connected to the first output connector 19 in order to be powered in parallel with the DC/AC converter device 20.

Alternatively, each fan 23a, 23b may be powered directly by the flyback power 26.

In detail, the fans 23a, 23b are advantageously configured to be powered by a direct current and the flyback power supply 26 preferably comprises a PWM (pulse width modulation) control system for powering the fans 23a, 23b so as to regulate the operating speed thereof.

In order to ensure a high safety level of the operating apparatus 14, the first output connector 19 preferably comprises a galvanic isolation member 27 for electrically isolating the AC/DC converter device 16 from the DC/AC converter device 20. Preferably, the galvanic isolation member 27 consists of, or comprises, an isolated DC/DC converter of the flyback type.

In detail, the AC/DC converter device 16 preferably comprises:
- a first line 28 and a second line 29;
- a preferably electronic switch element 30 which intercepts the second line 29 and is preferably connected to the control device 22 so as operated by the latter;
- a diode element 31 which is bridge-connected between the first line 28 and the second line 29 and which has a cathode 31a connected to the first line 28 and an anode 31b connected to the second line 29 downstream of the switch element 30;
- a capacitor element 32 bridge-connected between the first line and second line 29 and having a first terminal 32a connected to the first line 28 and a second terminal connected to the anode 31b of the diode element 31;
- an inductance element 33 arranged on the first line 28 and connecting the cathode 31a of the diode element 31 to the first terminal 32a of the capacitor element 32.

In an alternative embodiment, not shown, the AC/DC converter device 16 will consist of a polyester dielectric capacitor.

The AC/DC converter device 16 advantageously comprises an EMC filter 35 and preferably a diode bridge 36.

The DC/AC converter device 20 preferably comprises an inverter.

Optimization of the refrigerating machine 10 in order to obtain a high cooling efficiency at low power levels is obtained when the compressor 12 has a cylinder capacity preferably of between 1.0 cc and 4.0 cc and the compressor 12 correspondingly has a nominal power preferably of between 100 W and 1500 W. More preferably, the compressor 12 has a cylinder capacity of between 1.4 cc and 2.4 cc and even more preferably equal to 1.9 cc, where the compressor 12 correspondingly has a nominal power preferably of between 300 W and 1000 W and more preferably equal to 750 W.

Preferably the operating apparatus 14 comprises a converter device 34 connected to the variable-flowrate valve 15 in order to operate it and connected to the control device 22 in order to be driven so as to regulate opening of the variable-flowrate valve 15.

The switch element 30 advantageously comprises an IGBT element which preferably comprises an isolated gate bipolar transistor, IGBT, with a diode in parallel, where the transistor is connected to the control device 22 in order to be operated upon command.

"IGBT elements" and "diode elements" are understood as meaning electronic components necessarily formed by IGBTs and diodes, but designed to perform the function thereof in an equivalent manner.

Generally speaking the operating apparatus 14 is configured so as to lower the voltage from the input voltage V-mains to the power supply voltage Va.

Moreover, the control device 22 is advantageously configured so as to detect at its input:
- the input voltage V-mains
- the zero-crossing phase of the input voltage V-mains;
- the current intensity of the input current across the first input connector 17;
- the shut-down state of the switch element 30.

The control device 22 is advantageously configured so as to operate at its output:
- the isolated gate bipolar transistor, IGBT, of the switch element 30;
- the fans 23a and 23b by means of the flyback power supplier 26;
- preferably a serial communications device 37, to which it is connected by means of an opto-isolator which in the figure is identified by the reference "opto";
- the galvanic isolation member 27 so as to ensure the galvanic isolation of input and output.

In the present text "AC" is understood as meaning alternating current and "DC" is understood as meaning direct current.

Generally in an independent manner the present invention also relates to an operating apparatus 14 as described above.

Moreover, the control device 22 is configured to implement control and correction of the power factor, namely in the technical jargon it also acts as a PFC controller.

Preferably, the operating apparatus 14 also comprises a safety device for switching off the electric motor 13, which is connected to the control device 22 so that it may be operated by the latter when predefined alarm conditions occur.

Said safety device preferably comprises an STO (safe torque off) element 38 or, in a less preferred solution, a switch-off remote control switch.

In detail, the STO element 38 is configured to ensure the interruption of the motor current flow to the second output connector 21 when said alarm conditions occur, so as to switch off safely the compressor 12.

The invention thus devised may be subject to numerous modifications and variations. However, the scope of protection is solely defined by the attached claims.

Moreover all the details may be replaced by other technically equivalent elements. Basically the materials used as well as the forms and dimensions associated therewith may be varied depending on the particular requirements and the state of the art.

Where the constructional characteristics and the techniques mentioned in the following claims are followed by reference numbers or symbols, these reference numbers or symbols have been assigned with the sole purpose of facilitating understanding of the said claims and consequently they do not limit in any way the interpretation of each element which is identified, purely by way of example, by said reference numbers or symbols.

## Claims

1. Low power refrigerating machine (10) for cooling a power cabinet or an electronic or electromechanical device, which comprises:
- a cooling circuit (11) comprising a compressor (12);
- an electric motor (13) connected to said compressor (12) in order to operate it;
- an operating apparatus (14) connected to said electric motor (13) in order to power wherein
said operating apparatus (14) comprises:
- an AC/DC converter device (16) configured so that it may be connected, by means of a first input connector (17), to a single-phase or three-phase or DC electrical network (18) and so as to provide a first output connector (19) with an output voltage (Vu);
- a DC/AC converter device (20) connected to said first output connector (19) so as to be powered by the latter at said output voltage (Vu) and having a second output connector (21) connected directly to said electric motor (13) in order to power it; said DC/AC converter device (20) being configured to power said electric motor (13) with a power supply voltage (Va) and at a power supply frequency which are variable upon command and independent of the power supply provided by said electrical network (18);
- a control device (22) connected to said AC/DC converter device (16) and to said DC/AC converter device (20);
- at least one fan (23a, 23b) connected to said control device (22) so as be operated at a variable speed; said cooling circuit (11) comprising at least one heat exchanger to which said at least one fan (23a, 23b) is connected;
- **characterized in that** the refrigerating machine further comprises a flyback power supply (26) connected to:
- said first output connector (19), in order to be powered;
- said at least one fan (23a, 23b), in order to regulate the speed of rotation thereof;
- said control device (22) in order to be operated so as to regulate the speed of rotation of said at least one fan (23a, 23b) depending on the operating conditions of said cooling circuit (11); and wherein said at least one fan (23a, 23b) is configured to be powered by a DC current and the flyback power supply (26) comprises a PWM control system for powering the at least one fan (23a, 23b) in order to regulate the operating speed thereof.

2. Refrigerating machine (10) according to one of the preceding claims, **characterized in that** said first output connector (19) comprises a galvanic isolation member (27) for electrically isolating said AC/DC converter device (16) from said DC/AC converter device (20).

3. Refrigerating machine (10) according to one of the preceding claims, **characterized in that** said AC/DC converter device (16) comprises:
- a first line (28) and a second line (29);
- a switch element (30) which intercepts said second line (29);
- a diode element (31) bridge-connected between said first line (28) and said second line (29) and having a cathode (31a) connected to said first line (28) and an anode (31b) connected to said second line (29) downstream of said switch element (30);
- a capacitor element (32) bridge-connected between said first line and said second line (29) and having a first terminal (32a) connected to said first line (28) and a second terminal connected to the anode (31b) of said diode element (31);
- an inductance element (33) arranged on said first line (28) and connecting the cathode (31a) of said diode element (31) to the first terminal (32a) of said capacitor element (32).

4. Refrigerating machine (10) according to one of the preceding claims, **characterized in that** said AC/DC converter device (16) comprises an EMC filter (35).

5. Refrigerating machine (10) according to one of the preceding claims, **characterized in that** said control device (22) is configured to implement control and correction of the power factor.

6. Refrigerating machine (10) according to one of the preceding claims, **characterized in that** said DC/AC converter device (20) comprises an inverter.

7. Refrigerating machine (10) according to one of the preceding claims, **characterized in that** said compressor (12) has a cylinder capacity of between 1 cc and 4 cc and said compressor (12) has a nominal cooling power correspondingly comprised between 100 W and 1500 W.

8. Refrigerating machine (10) according to claim 7, **characterized in that**:
- said compressor (12) has a cylinder capacity of between 1.4 cc and 2.4 cc and preferably equal to 1.9 cc;
- said compressor (12) has a nominal cooling power correspondingly comprised between 300 W and 1000 W and preferably equal to 750 W.

9. Refrigerating machine (10) according to one of the preceding claims, **characterized in that** said cooling circuit (11) comprises:
- a variable-flowrate valve (15) which can be operated so as to modulate the flowrate of the cooling fluid circulating in the cooling circuit (11); or
- a fixed-flowrate throttling member, such as a capillary device.

## Patentansprüche

1. Energieeffizientes Kühlgerät (10) zum Kühlen eines Schaltschranks oder einer elektronischen oder elektromechanischen Vorrichtung, das Folgendes aufweist:
- einen Kühlkreislauf (11) mit einem Kompressor (12);
- einen Elektromotor (13), der an den Kompressor (12) angeschlossen ist, um ihn zu betreiben;
- eine Betriebsvorrichtung (14), die an den Elektromotor (13) angeschlossen ist, um ihn mit Energie zu versorgen, wobei die Betriebsvorrichtung (14) aufweist:
- eine AC/DC-Wandlervorrichtung (16), die so ausgelegt ist, dass sie mittels eines ersten Eingangsverbinders (17) an eine Einzelphase oder an drei Phasen oder an ein elektrisches Gleichstromnetz (18) angeschlossen werden kann, um einen ersten Ausgangsverbinder (19) mit einer Ausgangsspannung (Vu) zu versorgen;
- eine DC/AC-Wandlervorrichtung (20), die an den ersten Ausgangsverbinder (19) angeschlossen ist, um von diesem mit der Ausgangsspannung (Vu) versorgt zu werden, und einen zweiten Ausgangsverbinder (21) hat, der direkt an den Elektromotor (13) angeschlossen ist, um ihn mit Energie zu versorgen; wobei die DC/AC-Wandlervorrichtung (20) dazu ausgelegt ist, den Elektromotor (13) mit einer Energieversorgungsspannung (Va) und einer Energieversorgungsfrequenz zu versorgen, die auf Anweisung und unabhängig von der vom Stromnetz (18) bereitgestellten Energiezufuhr veränderbar sind;
- eine Steuerungsvorrichtung (22), die an die AC/DC-Wandlervorrichtung (16) und die DC/AC-Wandlervorrichtung (20) angeschlossen ist;
- mindestens ein Gebläse (23a, 23b), das an die Steuerungsvorrichtung (22) angeschlossen ist, um mit einer variablen Geschwindigkeit betrieben zu werden; wobei der Kühlkreislauf (11) mindestens einen Wärmetauscher aufweist, an den das mindestens eine Gebläse (23a, 23b) angeschlossen ist;
- **dadurch gekennzeichnet, dass** das Kühlgerät darüber hinaus eine Flyback-Energieversorgung (26) aufweist, die angeschlossen ist an:
- den ersten Ausgangsverbinder (19), um mit Energie versorgt zu werden;
- das mindestens eine Gebläse (23a, 23b), um dessen Drehzahl zu regeln;
- die Steuerungsvorrichtung (22), um so betrieben zu werden, dass die Drehzahl des mindestens einen Gebläses (23a, 23b) abhängig von den Betriebsbedingungen des Kühlkreislaufs (11) geregelt wird; und wobei das mindestens eine Gebläse (23a, 23b) dazu ausgelegt ist, durch einen Gleichstrom mit Energie versorgt zu werden, und die Flyback-Energieversorgung (26) ein PWM-Steuerungssystem aufweist, um das mindestens eine Gebläse (23a, 23b) anzutreiben, um dessen Drehzahl zu regeln.

2. Kühlgerät (10) nach einem der vorhergehenden Ansprüche, **dadurch gekennzeichnet, dass** der erste Ausgangsverbinder (19) ein galvanisches Isolationselement (27) aufweist, um die AC/DC-Wandlervorrichtung (16) gegenüber der DC/AC-Wandlervorrichtung (20) elektrisch zu isolieren.

3. Kühlgerät (10) nach einem der vorhergehenden Ansprüche, **dadurch gekennzeichnet, dass** die AC/DC-Wandlervorrichtung (16) aufweist:
- eine erste Leitung (28) und eine zweite Leitung (29);
- ein Schaltelement (30), das die zweite Leitung (29) unterbricht;
- ein Diodenelement (31), das in Brückenschaltung zwischen der ersten Leitung (28) und der zweiten Leitung (29) angeschlossen ist und eine Kathode (31a), die an die erste Leitung (28) angeschlossen ist, und eine Anode (31b) aufweist, die an die zweite Leitung (29) stromabwärts des Schaltelements (30) angeschlossen ist;
- ein Kondensatorelement (32), das in Brückenschaltung zwischen der ersten Leitung und der zweiten Leitung (29) angeschlossen ist und einen ersten Anschluss (32a), der an die erste Leitung (28) angeschlossen ist, und einen zweiten Anschluss aufweist, der an die Anode (31b) des Diodenelements (31) angeschlossen ist;
- ein Induktivitätselement (33), das an der ersten Leitung (28) angeschlossen ist und die Kathode (31a) des Diodenelements (31) mit dem ersten Anschluss (32a) des Kondensatorelements (32) verbindet.

4. Kühlgerät (10) nach einem der vorhergehenden Ansprüche, **dadurch gekennzeichnet, dass** die AC/DC-Wandlervorrichtung (16) ein EMC-Filter (35) aufweist.

5. Kühlgerät (10) nach einem der vorhergehenden Ansprüche, **dadurch gekennzeichnet, dass** die Steuerungsvorrichtung (22) dazu ausgelegt ist, eine Steuerung und Korrektur des Leistungsfaktors durchzuführen.

6. Kühlgerät (10) nach einem der vorhergehenden Ansprüche, **dadurch gekennzeichnet, dass** die DC/AC-Wandlervorrichtung (20) einen Wechselrichter aufweist.

7. Kühlgerät (10) nach einem der vorhergehenden Ansprüche, **dadurch gekennzeichnet, dass** der Kompressor (12) einen Zylinderinhalt zwischen 1 cm³ und 4 cm³ aufweist und der Kompressor (12) eine nominale Kühlleistung hat, die entsprechend zwischen 100 W und 1500 W liegt.

8. Kühlgerät (10) nach Anspruch 7, **dadurch gekennzeichnet, dass**:
- der Kompressor (12) einen Zylinderinhalt zwischen 1,4 cm³ und 2,4 cm³ und vorzugsweise gleich 1,9 cm³ hat;
- der Kompressor (12) eine nominale Kühlleistung hat, die entsprechend zwischen 300 W und 1000 W liegt und vorzugsweise 750 W beträgt.

9. Kühlgerät (10) nach einem der vorhergehenden Ansprüche, **dadurch gekennzeichnet, dass** der Kühlkreislauf (11) aufweist:
- ein Ventil (15) mit veränderbarem Durchfluss, das so betrieben werden kann, dass es den Durchfluss des Kühlfluids verändert, das im Kühlkreislauf (11) zirkuliert; oder
- ein Drosselelement mit festgelegtem Durchfluss, wie z.B. eine Kapillarvorrichtung.

## Revendications

1. Machine de réfrigération à basse puissance (10) pour le refroidissement d'une armoire électrique ou d'un dispositif électronique ou électromécanique, qui comprend :
- un circuit de refroidissement (11) comprenant un compresseur (12) ;
- un moteur électrique (13) connecté audit compresseur (12) afin de le faire fonctionner ;
- un appareil d'exploitation (14) connecté audit moteur électrique (13) afin d'alimenter
dans laquelle ledit appareil d'exploitation (14) comprend :
- un dispositif convertisseur courant alternatif/courant continu, CA/CC (16), configuré de sorte qu'il peut être connecté, au moyen d'un premier connecteur d'entrée (17), à un réseau électrique monophasé ou triphasé ou à CC (18) et de façon à fournir, à un premier connecteur de sortie (19), une tension de sortie (Vu) ;
- un dispositif convertisseur CC/CA (20) connecté audit premier connecteur de sortie (19) de façon à être alimenté par ce dernier à ladite tension de sortie (Vu) et ayant un second connecteur de sortie (21) directement connecté audit moteur électrique (13) afin de l'alimenter; ledit dispositif convertisseur CC/CA (20) étant configuré pour alimenter ledit moteur électrique (13) avec une tension d'alimentation électrique (Va) et à une fréquence d'alimentation électrique qui sont variables sur ordre et indépendantes de l'alimentation électrique fournie par ledit réseau électrique (18);
- un dispositif de commande (22) connecté audit dispositif convertisseur CA/CC (16) et audit dispositif convertisseur CC/CA (20) ;
- au moins un ventilateur (23a, 23b) connecté audit dispositif de commande (22) de façon à être mis en fonctionnement à une vitesse variable; ledit circuit de refroidissement (11) comprenant au moins un échangeur de chaleur auquel ledit au moins un ventilateur (23a, 23b) est connecté ;
- **caractérisée en ce que** la machine de réfrigération comprend en outre une alimentation électrique à transfert indirect (26) connectée :
- audit premier connecteur de sortie (19), afin d'être alimenté ;
- audit au moins un ventilateur (23a, 23b), afin de réguler sa vitesse de rotation ;
- audit dispositif de commande (22) afin d'être mis en fonctionnement de façon à réguler la vitesse de rotation dudit au moins un ventilateur (23a, 23b) en fonction des conditions de fonctionnement dudit circuit de refroidissement (11); et dans laquelle ledit au moins un ventilateur (23a, 23b) est configuré pour être alimenté par un courant CC et l'alimentation électrique à transfert indirect (26) comprend un système de commande à modulation de largeur d'impulsions, PWM, pour alimenter le au moins un ventilateur (23a, 23b) afin de réguler sa vitesse de fonctionnement.

2. Machine de réfrigération (10) selon l'une des revendications précédentes, **caractérisée en ce que** ledit premier connecteur de sortie (19) comprend un organe d'isolation galvanique (27) pour isoler électriquement ledit dispositif convertisseur CA/CC (16) par rapport audit dispositif convertisseur CC/CA (20).

3. Machine de réfrigération (10) selon l'une des revendications précédentes, **caractérisée en ce que** ledit dispositif convertisseur CA/CC (16) comprend :
- une première ligne (28) et une seconde ligne (29) ;
- un élément commutateur (30) qui intercepte ladite seconde ligne (29);
- un élément diode (31) connecté en pont entre ladite première ligne (28) et ladite seconde ligne (29) et ayant une cathode (31a) connectée à ladite première ligne (28) et une anode (31b) connectée à ladite seconde ligne (29) en aval dudit élément commutateur (30) ;
- un élément condensateur (32) connecté en pont entre ladite première ligne et ladite seconde ligne (29) et ayant une première borne (32a) connectée à ladite première ligne (28) et une seconde borne connectée à l'anode (31b) dudit élément diode (31) ;
- un élément inductance (33) agencé sur ladite première ligne (28) et connectant la cathode (31a) dudit élément diode (31) à la première borne (32a) dudit élément condensateur (32).

4. Machine de réfrigération (10) selon l'une des revendications précédentes, **caractérisée en ce que** ledit dispositif convertisseur CA/CC (16) comprend un filtre de compatibilité électromagnétique, EMC (35).

5. Machine de réfrigération (10) selon l'une des revendications précédentes, **caractérisée en ce que** ledit dispositif de commande (22) est configuré pour mettre en œuvre la commande et la correction du facteur de puissance.

6. Machine de réfrigération (10) selon l'une des revendications précédentes, **caractérisée en ce que** ledit dispositif convertisseur CC/CA (20) comprend un onduleur.

7. Machine de réfrigération (10) selon l'une des revendications précédentes, **caractérisée en ce que** ledit compresseur (12) possède une cylindrée d'entre 1 cc et 4 cc et ledit compresseur (12) possède une puissance de refroidissement nominale comprise de manière correspondante entre 100 W et 1500 W.

8. Machine de réfrigération (10) selon la revendication 7, **caractérisée en ce que** :
- ledit compresseur (12) possède une cylindrée d'entre 1,4 cc et 2,4 cc et de préférence égale à 1,9 cc ;
- ledit compresseur (12) possède une puissance de refroidissement nominale comprise de manière correspondante entre 300 W et 1000 W et de préférence égale à 750 W.

9. Machine de réfrigération (10) selon l'une des revendications précédentes, **caractérisée en ce que** ledit circuit de refroidissement (11) comprend :
- une vanne à débit variable (15) qui peut être mise en fonctionnement de façon à moduler le débit du fluide de refroidissement circulant dans le circuit de refroidissement (11) ; ou
- un organe d'étranglement à débit fixe, tel qu'un dispositif capillaire.
